# EUROPÄISCHE PATENTSCHRIFT

(11) **EP 2 279 890 B1**
(45) Veröffentlichungstag und Bekanntmachung des Hinweises auf die Patenterteilung: **02.10.2019**
(21) Anmeldenummer: 10004379.3
(22) Anmeldetag: 24.04.2010
(51) Int. Cl.: B60K 35/00, G01D 7/08, G07C 5/00, B60R 16/023, B60K 37/02, B60Q 9/00, B60R 1/00, G06K 9/00, G06T 19/00

(54) **Verfahren und Vorrichtung zur Anzeige von Fahrzuständen eines Hybridfahrzeuges**
Method and device for displaying the driving status of a hybrid vehicle
Procédé et dispositif d'affichage d'états de marche d'un véhicule hybride

(30) Priorität: 29.07.2009 DE 102009035139
(43) Veröffentlichungstag der Anmeldung: 02.02.2011
(73) Patentinhaber: MAN Truck & Bus SE, 80995 München (DE)
(72) Erfinder: Krückl, Wolfgang, 85229 Markt Indersdorf (DE); Michel, Britta, 81675 München (DE); Mohra, Holger, 80805 München (DE); Dörner, Karlheinz, 85757 Karlsfeld (DE); Kerschl, Stefan, 85402 Kranzberg (DE); Drimml, Peter, 85221 Dachau (DE)
(74) Vertreter: v. Bezold & Partner Patentanwälte - PartG mbB

(56) Entgegenhaltungen:
- DE-C1- 19 533 829
- JP-A- 2009 040 197
- US-A- 4 166 382
- US-A1- 2009 157 267

## Beschreibung

Die vorliegende Erfindung betrifft eine Vorrichtung sowie ein Verfahren zur Anzeige von Fahrzuständen eines Hybridfahrzeuges mit einer Anzeigefläche und einem zugehörigen Zeigermittel, sowie einer Steuerungseinrichtung zur Ansteuerung des Zeigermittels.

Aus der DE 195 33 829 C1 ist eine Vorrichtung zur Überwachung der Antriebsleistung bei Fahrzeugen mit einem Elektro- oder Hybridantrieb bekannt. Das daraus bekannte Anzeigeinstrument weist mindestens eine veränderbare Bereichsmarkierung zur Anzeige eines Leistungsgrenzwertes auf. Mit der bereits bekannten Vorrichtung ist es bekannt die Fahrzustände eines Hybridfahrzeuges anzuzeigen. In der Praxis hat sich jedoch gezeigt, dass eine derartige Anzeigeeinrichtung in der Kürze der einem Fahrer zur Verfügung stehenden Zeit nicht immer vollständig erfasst werden kann.

Die US 2009/157267 A1 offenbart eine kraftstoffeffiziente Fahrleitanzeige mit einem eindimensionalen Balkendiagramm. Ein Soll-Fahrzustand ist als Kraftstoffeinsparungsbereich und ein nicht kraftstoffeffizienter Fahrzustand als schneller Verzögerungs- oder Beschleunigungsbereich dargestellt. Der aktuelle Fahrzustand eines Fahrzeugs wird durch eine Nadel angezeigt.

Die JP 2009 040197 A offenbart eine Anzeige, die den Fahrer über den Ausgangszustand des Fahrzeugs informiert und einen Zeiger und eine ECO-Lampe beinhaltet.

Aufgabe der vorliegenden Erfindung ist es daher eine Anzeigevorrichtung mit einer verbesserten Ablesbarkeit und Informationsbereitstellung zu schaffen.

Diese Aufgaben werden mit einer Vorrichtung gemäß den Merkmalen des Patentanspruchs 1 sowie des Verfahrensanspruchs 5 gelöst. Weitere vorteilhafte Ausgestaltungen der Erfindung sind in den abhängig formulierten Patentansprüchen angegeben. Es wird darauf hingewiesen, dass die in den abhängig formulierten Patentansprüchen einzelnen aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Zur Lösung der vorgenannten Aufgabe weist die Vorrichtung zur Anzeige von Fahrzeugzuständen eines Hybridfahrzeuges mit einer Anzeigefläche und einem zugehörigen Zeigermittel sowie einer Steuerungseinrichtung zur Ansteuerung des Zeigermittels zusätzlich wenigstens einen Brems- und einen Beschleunigungsbereich auf, wobei der Informationsinhalt der Anzeigefläche unveränderlich festgelegt ist. Unter Fahrzuständen eines Hybridfahrzeuges sind unter anderem drei Zustände zu verstehen. Es handelt sich dabei um den Brems-, den Beschleunigungs- und den Stoppzustand. Unter einem Hybridfahrzeug wird im Rahmen der vorliegenden Erfindung jegliche Art von Hybridfahrzeugen verstanden, insbesondere solche mit seriellen und/oder parallelen Hybridantrieben. Weiterhin ist unter dem Begriff Zeigermittel vorzugsweise ein auf einer Drehachse angeordneter mechanischer Zeiger zu verstehen. Darüber hinaus können aber auch andere Zeigermittel, wie beispielsweise auf einem LCD-Bildschirm dargestellte Pfeile oder sonstige Symbole zur Anzeige eines bestimmten Ortes auf der Anzeigefläche dienen und damit als Zeigermittel Verwendung finden. Die ebenfalls verwendete Steuerungseinrichtung ist vorzugsweise als elektronische Datenverarbeitungsanlage ausgebildet, die dazu geeignet ist unter Ausführung bestimmter vorgegebener Programme und Regeln in Folge von Eingangssignalen wenigstens ein definiertes Ausgangssignal zu erzeugen. Die Steuerungseinrichtung ist dabei so mit den Zeigermitteln verbunden, dass die Stellung der Zeigermittel durch die Ausgangsignale der Steuerungseinrichtung vorgegeben werden kann.

Bei einer besonders einfachen und bevorzugten Ausführungsform der Erfindung ist nun vorgesehen, dass die Vorrichtung wenigstens einen Brems- und einen Beschleunigungsbereich aufweist, der vorzugsweise auf der Anzeigefläche ausgebildet ist und der auf der Anzeigefläche ausgegebene Informationsinhalt unveränderlich festgelegt ist. Unter Informationsinhalt wird die Art und der Umfang der dargestellten Informationen verstanden. Hierbei können beispielsweise im Rahmen einer Umschaltung zwischen Tagfahrlicht und Nachtfahrlicht durchaus Veränderungen der Anzeigefläche auftreten, ohne deren Informationsinhalt zu verändern. Durch die Verwendung einer unveränderlichen Anzeigefläche in Kombination mit einem einfachen Zeigermittel ist es nun möglich die von der Steuerungseinrichtung ermittelten Fahrzustände in besonders einfacher und somit für einen Fahrer schnell erfassbaren Weise darzustellen. Der Fahrer wird von unnötigen Zusatzinformationen entlastet und kann in sehr kurzer Zeit erfassen, ob es sich um einen Brems- oder Beschleunigungszustand handelt und darüber hinaus anhand der Zeigermittel ablesen, ob es sich um einen guten oder schlechten Brems- oder Beschleunigungsvorgang und damit einen energetisch sinnvolleren oder wenig sinnvolleren Fahrzustand handelt. Die stets unveränderliche Anzeigefläche entlastet den Fahrer dabei von jeglichen Interpretationstätigkeiten.

Bei einer besonders bevorzugten Weiterbildung der Erfindung ist vorgesehen, dass zusätzlich wenigstens ein weiterer Stoppbereich vorgesehen ist, in den das Zeigermittel zeigt, wenn das Hybridfahrzeug funktionslos abgestellt ist. Hierdurch kann eine zusätzliche Information von der Vorrichtung bereitgestellt werden. Bei bekannten Anzeigen ist es nämlich nicht oder nur schwer möglich zu erkennen, ob das Fahrzeug funktionslos abgestellt ist oder sich funktionsbereit im Stillstand befindet.

Weiterhin besonders vorteilhaft ist es, wenn wenigstens der Brems- oder der Beschleunigungsbereich zur Anzeige mehrerer unterschiedlicher Fahrzustände ausgebildet ist. Hierbei sind beide Bereiche in sich nochmals unterteilt und ermöglichen die Darstellung von unterschiedlichen Fahrzuständen wie z. B. starkes oder weniger starkes Bremsen, starkes oder weniger starkes Beschleunigen, rein elektrisches Bremsen, rein elektrisches Antreiben, kombiniertes Antreiben mit Verbrennungsmotor und Elektromotor oder kombiniertes Bremsen mit Betriebsbremse und Elektromotor.

Bei einer ganz besonders bevorzugten Ausführungsform der vorliegenden Erfindung ist weiterhin vorgesehen, dass wenigstens der Brems- oder der Beschleunigungsbereich eine Gutseite und eine Schlechtseite aufweist. Hierdurch wird dem Fahrer eine besonders einfache Erkennung von energetisch günstigen Fahrzuständen ermöglicht, indem das Zeigermittel möglichst im Bereich der Gutseite des jeweiligen Bereichs gehalten werden soll.

Das erfindungsgemäße Verfahren auf das sich die Erfindung ferner richtet, zeichnet sich dadurch aus, dass mittels der Steuerungseinrichtung der aktuelle Brems- oder Beschleunigungszustand ermittelt und danach mit dem Zeigermittel auf einer unveränderlichen Anzeigefläche angezeigt wird. Die Steuerungseinrichtung wird dazu genutzt, um verschiedene Informationen, wie beispielsweise den Speicherinhalt des elektrischen Energiespeichers, die Dynamik der Gaspedalbewegungen und die absolute Stellung des Gaspedals auszuwerten und ein entsprechendes Signal mittels des Zeigermittels auszugeben. Grundsätzlich dient dabei die Steuerungseinrichtung dazu eine Mehrzahl unterschiedlichster Eingangssignale, welche Parameter und Informationen repräsentieren, zusammenzufügen zu einem einzigen Ausgangssignal an den Fahrer. Der Fahrer wird hierdurch in besonders effizienter Weise von den Interpretationsaufgaben entlastet. Neben den genannten beispielhaften Signalen bzw. Informationen können aber auch weitere Informationen, wie etwa die Motortemperatur, Topografieinformation oder ähnliches von der Steuerungseinrichtung mitberücksichtigt werden.

Besonders vorteilhaft ist es dabei, wenn ein Stoppzustand angezeigt wird, wenn das Fahrzeug funktionslos abgestellt ist. Ein Fahrer erkennt dann anhand der einfachen Anzeige sofort, ob sich das Fahrzeug in einem betriebsbereiten Zustand befindet oder in einem vollständig funktionslosen Zustand, wie er beispielsweise beim Abstellen und Parken eines Fahrzeuges vorliegt. Der Fahrer kann so den Betriebszustand des Fahrzeuges ähnlich einfach ablesen, wie es bei analogen Drehzahlmessern der Fall ist. Dies ist von besonderer Bedeutung, da bei den erfindungsgemäßen Fahrzeugen im Stand akustische oder mechanische Rückmeldungen, beispielsweise durch Vibrationen oder Motorgeräusche, nicht gegeben sind.

Schließlich ist es bei einem weiteren besonders bevorzugten und vorteilhaften Ausführungsbeispiel der vorliegenden Erfindung vorgesehen, dass mittels der Steuerungseinrichtung ein bestimmter Fahrzustand aus einer Mehrzahl vorbekannter Fahrzustände ermittelt und dieser Fahrzustand in Abhängigkeit von einem Fahrzeugzustand zwischen einer Gutseite und einer Schlechtseite des Brems- oder Beschleunigungsbereichs angezeigt wird. Unter einem Fahrzustand ist dabei jegliche die Lage oder Bewegung des Fahrzeuges betreffen Information zu verstehen. Dies sind insbesondere Geschwindigkeit, Fahrzeugneigung.

Unter dem Fahrzeugzustand wiederum ist eine Vielzahl von Parameter, wie Fahrzeuggewicht, Motortemperatur, Füllstand der Energiespeicher, Temperatur der Energiespeicher etc. zu verstehen. Hierdurch wird es möglich noch genauer zwischen energetisch sinnvollen und energetisch weniger sinnvollen Fahrweisen zu differenzieren. So kann beispielsweise im Falle einer Zuschaltung eines Verbrennungsmotors zwischen den Fällen unterschieden werden, bei denen eine Zuschaltung aufgrund des leeren elektrischen Energiespeichers unbedingt erforderlich ist und solchen, bei denen die Zuschaltung des Verbrennungsmotors aufgrund eines übermäßigen Leistungsabrufes erfolgt. Während die Zuschaltung bei leerem elektrischen Energiespeicher gerechtfertigt ist, deutet die Zuschaltung des Verbrennungsmotors durch übermäßigen Leistungsabruf auf eine unökonomische Fahrweise hin. Berücksichtigt man nun weitere Größen, wie beispielsweise die Fahrbahnsteigung oder die Fahrzeugneigung und das Fahrzeuggewicht, kann ermittelt werden, ob der zusätzliche Leistungsabruf gerechtfertigt ist oder nicht. Dies kann dann mit einer entsprechenden Stellung des Zeigermittels auf der Anzeigefläche ausgegeben werden. Neben der besonders einfachen Ablesbarkeit stellt sich darüber hinaus ein Trainingseffekt für den Fahrer ein, so dass dessen Fahrweise verbrauchsgünstiger wird.

Vorzugsweise erfolgt dabei die Darstellung des Fahrzustandes durch das Zeigermittel auf einer skalierten Anzeigefläche. Die der Skalierung zugewiesenen Werte können so beispielsweise über die Fahrtdauer und/oder über die Fahrtstrecke integriert werden. Im Ergebnis führt dies zu einer Bonus-Malus-Ermittlung, die einem Fahrer beispielsweise in einem weiteren Anzeigefenster der Vorrichtung ausgegeben werden kann.

Nachfolgend wird die Erfindung sowie das technische Umfeld nun anhand der Figuren näher erläutert. Es ist darauf hinzuweisen, dass die Figuren besonders bevorzugte Ausführungsvarianten der Erfindung zeigen, auf die sie jedoch nicht beschränkt ist. In der Zeichnung zeigen schematisch:
- Fig. 1: eine erste Ausführungsform einer erfindungsgemäßen Vorrichtung;
- Fig. 2: eine zweite Ausführungsform einer erfindungsgemäßen Vorrichtung und
- Fig. 3: eine dritte Ausführungsform einer erfindungsgemäßen Vorrichtung.

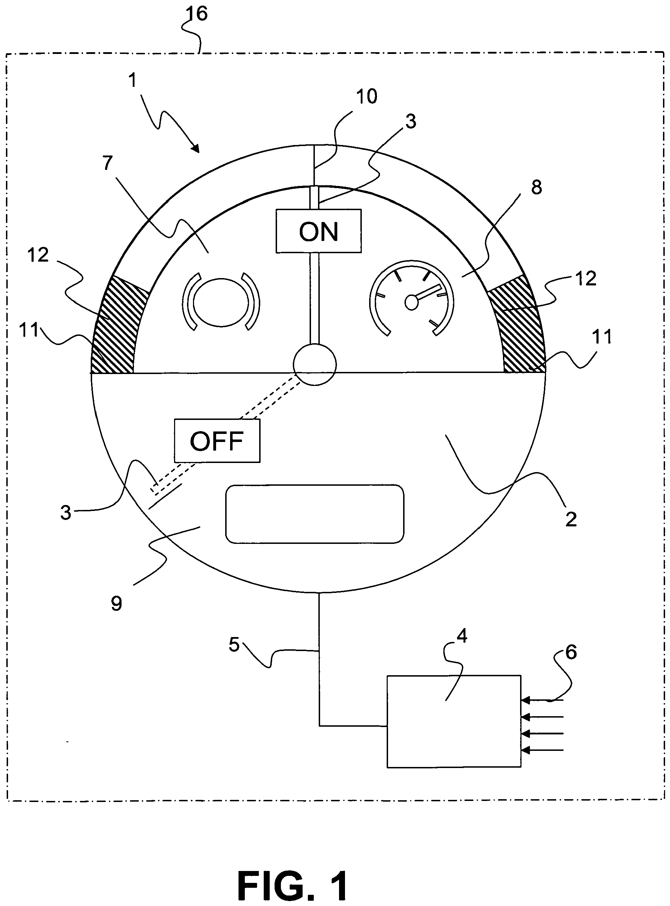

In Figur 1 ist eine erfindungsgemäße Vorrichtung 1 zur Anzeige von Fahrzuständen eines Hybridfahrzeuges 16 schematisch dargestellt. Die Vorrichtung 1 weist dazu eine kreisrunde Anzeigefläche 2 mit einem zugehörigen Zeigermittel 3 auf. Das Zeigemittel 3 ist mittels einer Leitung 5 an eine Steuerungseinrichtung 4 angebunden. Die Steuerungseinrichtung 4 weist Eingänge 6 für verschiedene Signale wie beispielsweise Fahrzeuggewicht, Ladezustand des elektrischen Speichers, Fahrgeschwindigkeit, Motortemperatur und ähnliches auf. Ferner ist die Anzeigefläche 2 in einen Bremsbereich 7 und einen Beschleunigungsbereich 8 unterteilt. Weiterhin weist die Anzeigefläche 2 einen Stoppbereich 9 auf in dem das gestrichelt dargestellte Zeigermittel 3 zeigt, wenn das Fahrzeug vollständig funktionslos abgestellt ist.

Bei der hier gezeigten Ausführungsform teilen sich der Bremsbereich 7 und der Beschleunigungsbereich 8 eine in der Mitte liegende Gutseite 10. An der gegenüberliegenden Seite des Bremsbereiches 7 bzw. des Beschleunigungsbereiches 8 finden sich jeweils zugehörige Schlechtseiten 11. Fährt ein Fahrer nun energetisch besonders sinnvoll, so wird sich das Zeigermittel 3 überwiegend im Bereich der Gutseite 10, d. h. im oberen mittleren Bereich der Anzeigefläche 2 bewegen. Sofern eine energetisch weniger sinnvolle Fahrweise gewählt wird, bewegt sich das Zeigermittel 3 entsprechend dem Fahrzustand entweder im Bremsbereich 7 oder im Beschleunigungsbereich 8 weiter nach außen in Richtung der Schlechtseiten 11.

Sowohl der Bremsbereich 7 als auch der Beschleunigungsbereich 8 sind in sich nochmals unterteilt. Die beiden jeweils schraffiert dargestellten Grenzbereiche 12 werden vom Zeigermittel 3 überstrichen, wenn der Einsatz der Betriebsbremse zusätzlich zur Bremsfunktion des Elektromotors oder der Einsatz des Verbrennungsmotors zusätzlich zum Elektromotor erfolgt.

Darüber hinaus kann ein Fahrer der in Fig. 1 dargestellten Ausführungsform sofort entnehmen, dass sich das Fahrzeug im eingeschalteten Zustand befindet, da das Zeigermittel 3 sich in der oberen Hälfte befindet, und damit außerhalb des Stoppbereichs 9.

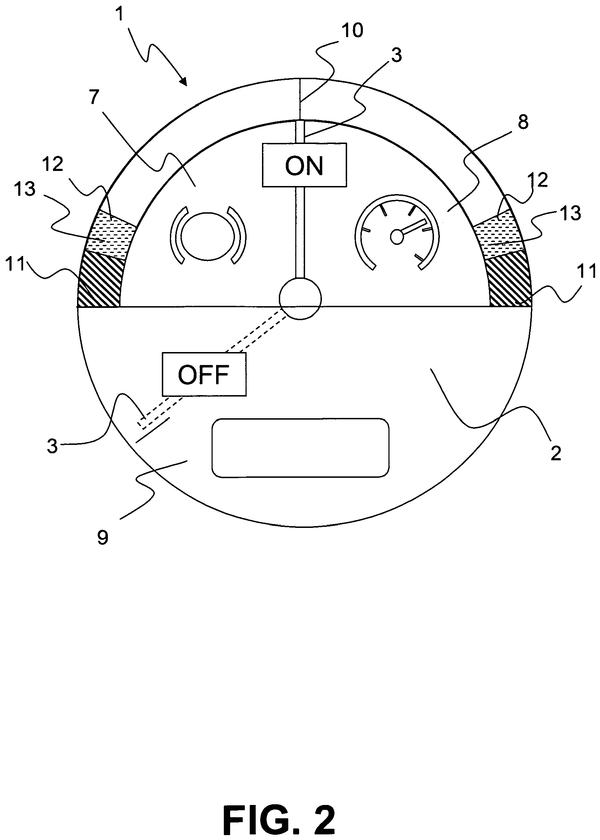

In Fig. 2 ist nun eine weitere Ausführungsform einer erfindungsgemäßen Anzeige 1 dargestellt, bei der die Grenzbereiche 12 zusätzlich in sich unterteilt sind. Die Grenzbereiche 12 weisen dabei jeweils zusätzliche Übergangsbereiche 13 auf, die beispielsweise bei einem Aufbringen des Anlegedrucks auf die Betriebsbremse im Fall des Bremsbereiches 7 überstrichen werden, solange die Betriebsbremse anliegt aber noch keine nennenswerte Bremswirkung entfaltet. Andererseits kann im Falle des Beschleunigungsbereiches 8 der Übergangsbereich 13 vom Zeigermittel 3 überstrichen werden, wenn der Motor bereits gestartet ist, jedoch noch keinen zusätzlichen Schub liefert.

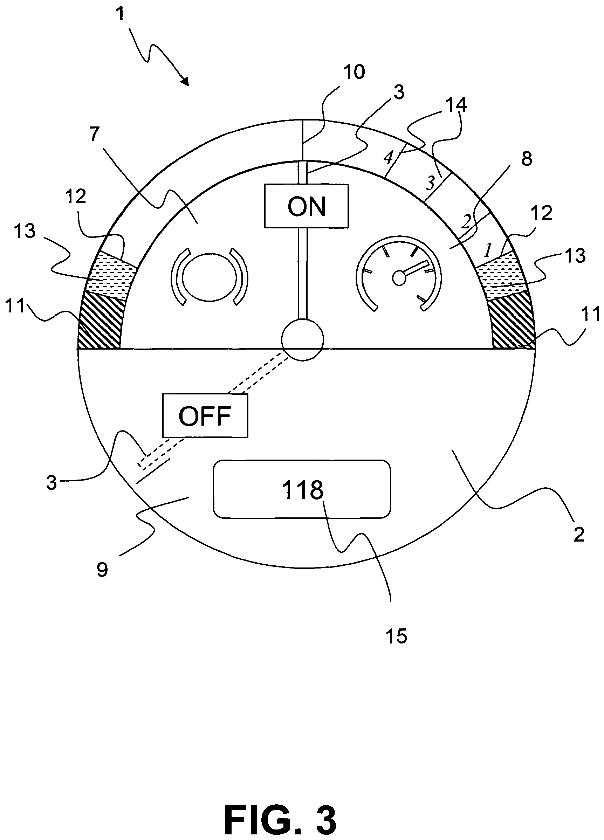

Schließlich ist in Fig. 3 eine ganz besonders bevorzugte Ausführungsform dargestellt, bei der der Beschleunigungsbereich 8 eine Skalierung 14 aufweist. Die Skalierung 14 besteht bei dem gezeigten Ausführungsbeispiel aus Zahlen ohne Einheitenangabe, wobei die Zahlenwerte der Skalierung hin zur Gutseite 10 ansteigen. Die Werte der Skalierung können beispielsweise in der Steuerungseinrichtung, über den Fahrweg und/oder die Fahrtdauer integriert werden und das Ergebnis in einem Anzeigefeld 15 als Wert ausgegeben werden. Der Fahrer erhält somit eine quantitative Rückmeldung bezüglich der Qualität seiner Fahrweise. Erreicht der Fahrer bei den gezeigten Ausführungsformen einen besonders hohen Zahlenwert, so entspricht dies einer besonders energiesparenden Fahrweise. Selbstverständlich ist es im Rahmen der Erfindung auch möglich Zahlenwerte in umgekehrter Wertung zu verwenden, so dass ein besonders niedriger Zahlenwert einer besonders energiesparenden Fahrweise entspricht. Vorzugsweise wird im Rahmen der vorliegenden Erfindung zudem berücksichtigt, ob der zusätzliche Einsatz des Verbrennungsmotors erforderlich war oder nicht. Wird nämlich ein Verbrennungsmotor zugeschaltet, ohne dass der elektrische Energiespeicher des Fahrzeuges vollständig entleert ist, so wird dies als weniger energiesparend angesehen und Zeigermittel 3 wandert in Richtung der Schlechtseite, wodurch sich das Integrationsergebnis für den Fahrer verschlechtert. Im anderen Fall, d. h. der Zuschaltung des Verbrennungsmotors aufgrund einer vollständigen Entleerung des elektrischen Energiespeichers sollte dann der Zeiger in Richtung Gutseite 10 wandern, da die Zuschaltung des Verbrennungsmotors nicht aufgrund einer unökonomischen Fahrweise des Fahrers erfolgt. Weiterhin können im Anzeigefeld zumindest zeitweise auch andere für ein Hybridfahrzeug wichtige Informationen angezeigt werden, die im Zusammenhang mit der übrigen Anzeige stehen.

Im Übrigen wird darauf hingewiesen, dass die vorliegende Erfindung nicht auf die dargestellten Ausführungsbeispiele beschränkt ist. Es sind vielmehr zahlreiche Abwandlungen der Erfindung im Rahmen der Patentansprüche möglich, ohne den Grundgedanken der Erfindung zu verlassen.

### Bezugszeichenliste

- 1): Vorrichtung
- 2): Anzeigefläche
- 3): Zeigermittel
- 4): Steuerungseinrichtung
- 5): Leitung
- 6): Eingang
- 7): Bremsbereich
- 8): Beschleunigungsbereich
- 9): Stoppbereich
- 10): Gutseite
- 11): Schlechtseite
- 12): Grenzbereich
- 13): Übergangsbereich
- 14): Skalierung
- 15): Anzeigefeld
- 16): Hybridfahrzeug

## Patentansprüche

1. Vorrichtung (1) zur Anzeige von Fahrzuständen eines Hybridfahrzeuges (16) mit einer Anzeigefläche (2) und einem zugehörigen Zeigermittel (3), sowie einer Steuerungseinrichtung (4) zur Ansteuerung des Zeigermittels (3),
wobei
diese wenigstens einen Brems- und einen Beschleunigungsbereich (7, 8) aufweist und der Informationsinhalt der Anzeigefläche (2) unveränderlich festgelegt ist, wobei unter Informationsinhalt die Art und der Umfang der dargestellten Informationen verstanden wird, **dadurch gekennzeichnet, dass**
sowohl der Bremsbereich (7) als auch der Beschleunigungsbereich (8) in sich nochmals unterteilt sind; so dass Grenzbereiche (12) ausgebildet werden, wobei ein Grenzbereich (12) des Bremsbereichs (7) von dem Zeigermittel (3) überstrichen wird, wenn der Einsatz einer Betriebsbremse zusätzlich zur Bremsfunktion eines Elektromotors erfolgt; oder
ein Grenzbereich (12) des Beschleunigungsbereichs (8) von dem Zeigermittel (3) überstrichen wird, wenn der Einsatz eines Verbrennungsmotors zusätzlich zum Elektromotor erfolgt.

2. Vorrichtung nach dem vorhergehenden Anspruch,
**dadurch gekennzeichnet, dass**
zusätzlich wenigstens ein weiterer Stoppbereich (9) vorgesehen ist, in den das Zeigermittel (3) zeigt, wenn das Hybridfahrzeug (16) funktionslos abgestellt ist.

3. Vorrichtung nach einem der vorhergehenden Ansprüche,
**dadurch gekennzeichnet, dass**
wenigstens der Brems- oder der Beschleunigungsbereich (7, 8) zur Anzeige mehrere unterschiedlicher Fahrzustände ausgebildet ist.

4. Vorrichtung nach einem der vorhergehenden Ansprüche,
**dadurch gekennzeichnet, dass**
wenigstens der Brems- oder der Beschleunigungsbereich (7, 8) eine Gutseite (10) und eine Schlechtseite (11) aufweist.

5. Verfahren zur Anzeige von Fahrzuständen eines Hybridfahrzeuges (16) mit einer Anzeigefläche (2) und einem zugehörigen Zeigermittel (3), sowie einer Steuerungseinrichtung (4) zur Ansteuerung des Zeigermittels (3),
wobei
mittels der Steuerungseinrichtung (4) der aktuelle Brems- oder Beschleunigungszustand ermittelt und
danach mit dem Zeigermittel (3) auf der unveränderlichen Anzeigefläche (2) angezeigt wird,
**dadurch gekennzeichnet, dass**
sowohl der Bremsbereich (7) als auch der Beschleunigungsbereich (8) in sich nochmals unterteilt sind; so dass Grenzbereiche (12) ausgebildet werden, wobei ein Grenzbereich (12) des Bremsbereichs (7) von dem Zeigermittel (3) überstrichen wird, wenn der Einsatz einer Betriebsbremse zusätzlich zur Bremsfunktion eines Elektromotors erfolgt; oder
ein Grenzbereich (12) des Beschleunigungsbereichs (8) von dem Zeigermittel (3) überstrichen wird, wenn der Einsatz eines Verbrennungsmotors zusätzlich zum Elektromotor erfolgt.

6. Verfahren nach dem vorhergehenden Anspruch,
**dadurch gekennzeichnet, dass**
ein Stoppzustand angezeigt wird, wenn das Hybridfahrzeug (16) funktionslos abgestellt ist.

7. Verfahren nach einem der vorhergehenden Ansprüche,
**dadurch gekennzeichnet, dass**
mittels der Steuerungseinrichtung ein bestimmter Fahrzustand aus einer Mehrzahl vorbekannter Fahrzustände ermittelt wird und dieser Fahrzustand in Abhängigkeit von einem Fahrzeugzustand zwischen einer Gutseite und einer Schlechtseite des Brems- oder Beschleunigungsbereichs angezeigt wird.

## Claims

1. A device (1) for displaying driving states of a hybrid vehicle (16) with a display face (2) and an associated pointer means (3) as well as a control apparatus (4) for actuating the pointer means (3), wherein
said device has at least one braking range (7) and acceleration range (8), and the information content of the display face (2) is defined in an invariable fashion, wherein information content is understood to be the type and the scope of the represented information,
**characterized in that**
both the braking range (7) and the acceleration range (8) are subdivided once more; so that limiting ranges (12) are formed, wherein a limiting range (12) of the braking range (7) is passed over by the pointer means (3) if a service brake is used in addition to the braking function of an electric motor; or
a limiting range (12) of the acceleration range (8) is passed over by the pointer means (3) if an internal combustion engine is used in addition to the electric motor.

2. The device according to the preceding claim,
**characterized in that**
in addition at least one further stop range (7) is provided, into which the pointer means (3) points when the hybrid vehicle (16) is parked in a functionless fashion.

3. The device according to either of the preceding claims,
**characterized in that**
at least the braking range (7) or the acceleration range (8) is designed to display a plurality of different driving states.

4. The device according to one of the preceding claims, **characterized in that**
at least the braking range (7) or the acceleration range (8) has a good side (10) and a bad side (11).

5. A method for displaying driving states of a hybrid vehicle (16) having a display face (2) and an associated pointer means (3) as well as a control apparatus (4) for actuating the pointer means (3), wherein
the current braking state or acceleration state is identified by means of the control apparatus (4), and
there is then a display with the pointer means (3) on the invariable display face (2),
**characterized in that**
both the braking range (7) and the acceleration range (8) are subdivided once more so that limiting ranges (12) are formed, wherein a limiting range (12) of the braking range (7) is passed over by the pointer means (3) if a service brake is used in addition to the braking function of an electric motor; or
a limiting range (12) of the acceleration range (8) is passed over by the pointer means (3) if an internal combustion engine is used in addition to the electric motor.

6. The method according to the preceding claim,
**characterized in that**
a stop state is displayed if the hybrid vehicle (16) is parked in a functionless fashion.

7. The method according to one of the preceding claims, **characterized in that**
a specific driving state from a multiplicity of previously known driving states is identified by means of the control apparatus, and this driving state is displayed in accordance with the driving state between a good side and a bad side of the braking range or acceleration range.

## Revendications

1. Dispositif (1) pour l'affichage d'états de marche d'un véhicule hybride (16) avec une surface d'affichage (2) et un moyen d'affichage correspondant (3), ainsi qu'avec un dispositif de commande (4) pour la commande du moyen d'affichage (3),
dans lequel celui-ci présente au moins une plage de freinage et une plage d'accélération (7, 8) et le contenu d'informations de la surface d'affichage (2) est fixé de façon invariable, dans lequel on entend par contenu d'informations la nature et la portée des informations représentées,
**caractérisé en ce que**
aussi bien la plage de freinage (7) que la plage d'accélération (8) sont elles-mêmes encore divisées, de telle manière que des zones limites (12) soient formées, dans lequel
une zone limite (12) de la plage de freinage (7) est balayée par le moyen d'affichage (3), lorsque l'on recourt à l'utilisation d'un frein de service en plus de la fonction de freinage d'un moteur électrique; ou
une zone limite (12) de la plage d'accélération (8) est balayée par le moyen d'affichage (3), lorsque l'on recourt à l'utilisation d'un moteur à combustion interne en plus du moteur électrique.

2. Dispositif selon la revendication précédente, **caractérisé en ce qu'**il est en outre prévu au moins une autre plage d'arrêt (9) dans laquelle le moyen d'affichage (3) indique quand le véhicule hybride (16) est arrêté sans fonction.

3. Dispositif selon l'une quelconque des revendications précédentes, **caractérisé en ce qu'**au moins la plage de freinage ou la plage d'accélération (7, 8) est conçue pour l'affichage de plusieurs états de marche différents.

4. Dispositif selon l'une quelconque des revendications précédentes, **caractérisé en ce qu'**au moins la plage de freinage ou la plage d'accélération (7, 8) présente un côté bon (10) et un côté mauvais (11).

5. Procédé pour l'affichage d'états de marche d'un véhicule hybride (16) avec une surface d'affichage (2) et un moyen d'affichage correspondant (3), ainsi qu'avec un dispositif de commande (4) pour la commande du moyen d'affichage (3),
dans lequel on détermine au moyen du dispositif de commande (4) l'état actuel de freinage ou d'accélération et on l'affiche ensuite avec le moyen d'affichage (3) sur la surface d'affichage invariable (2),
**caractérisé en ce que**
aussi bien la plage de freinage (7) que la plage d'accélération (8) sont elles-mêmes encore divisées, de telle manière que des zones limites (12) soient formées, dans lequel
une zone limite (12) de la plage de freinage (7) est balayée par le moyen d'affichage (3), lorsque l'on recourt à l'utilisation d'un frein de service en plus de la fonction de freinage d'un moteur électrique; ou
une zone limite (12) de la plage d'accélération (8) est balayée par le moyen d'affichage (3), lorsque l'on recourt à l'utilisation d'un moteur à combustion interne en plus du moteur électrique.

6. Procédé selon la revendication précédente, **caractérisé en ce que** l'on affiche un état d'arrêt, lorsque le véhicule hybride (16) est arrêté sans fonction.

7. Procédé selon l'une quelconque des revendications précédentes, **caractérisé en ce que** l'on détermine au moyen du dispositif de commande un état de marche déterminé à partir d'une multiplicité d'états de marche déjà connus et on affiche cet état de marche en fonction d'un état du véhicule entre un côté bon et un côté mauvais de la plage de freinage ou d'accélération.
